(19) Europäisches Patentamt
European Patent Office
Office européen des brevets

(11) **EP 2 610 810 A1**

(12) **EUROPEAN PATENT APPLICATION**

(43) Date of publication:
**03.07.2013 Bulletin 2013/27**

(51) Int Cl.:
***G06Q 40/02*** *(2012.01)*

(21) Application number: **12199779.5**

(22) Date of filing: **28.12.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **29.12.2011 US 201161581431 P**<br>**29.12.2011 US 201161581502 P**<br><br>(71) Applicant: **Equifax, Inc.**<br>**Atlanta, GA 30309 (US)** | (72) Inventors:<br>• **O'Connor, Martin**<br>**Waleska, GA 30183 (US)**<br>• **Zhu, Qianqiu**<br>**Alpharetta, GA 30005 (US)**<br>• **Richard, Daniel**<br>**Mableton, GA 30126 (US)**<br><br>(74) Representative: **Kinsler, Maureen Catherine**<br>**Marks & Clerk LLP**<br>**Aurora**<br>**120 Bothwell Street**<br>**Glasgow**<br>**G2 7JS (GB)** |

(54) **Score fusion based on the displaced force of gravity**

(57) Various embodiments provide systems, methods, and computer-program products for fusing at least two scores. In various embodiments, each of the scores predicts the probability of an outcome associated with a particular unit and an angle with respect to a horizon at which an object would rest at a point on a frictionless spherical surface is calculated based on the scores. The object comprises characteristics of the particular unit at said point on the spherical surface and the scores represent a downward force of gravity that would be exerted upon the object. In particular embodiments a displaced force is calculated based on the angle and the downward force of gravity interacting according to laws of physics. The displaced force is that which would need to be exerted upon the object to compel the object to move down the spherical surface and is used as a fused score.

FIG. 2

**Description**

CROSS-REFERENCE TO RELATED APPLICATIONS

This application claims priority to and the benefit of U.S. Application Number 61/581,502 entitled, "Systems and Methods for Score Fusion Based on Gravitational Force" that was filed on December 29, 2011; and U.S. Application Serial No. 61/581,431, entitled "Systems and Methods for Determining a Personalized Fusion Score" that was filed December 29, 2011; the entirety of both of which are hereby incorporated by reference herein.

BACKGROUND

Predictive modeling is generally concerned with analyzing patterns and trends in historical and operational data to transform the data into a useable format for making decisions. Typically, this is accomplished by analyzing and modeling the dynamics of the historical data to create a model that can predict the probability of an outcome of interest. The process of using a model to make predictions about behavior that has yet to happen is referred to as "scoring" and the output of the model (i.e., the prediction) is typically called a score. Scores can take several different forms such as numbers, strings, to entire data structures, but most often take the form of numbers. For instance, in the United States, various predictive models are generated to produce a credit risk score (i.e., a number) that predicts the creditworthiness of an individual. Lenders, such as banks and credit card companies, may then make use of an individual's credit score to evaluate the potential risk of lending money to the individual.

Score fusion is a process, methodology, and technique to combine multiple scores produced using one or more predictive models into one output score, with the purpose of achieving operational efficiency and driving for better score performance. A commonly known approach for performing score fusion is regression with scores as predictors, and outcome performance as the dependent variable. This approach is consistent with the method used for building credit scoring scorecards. Another known approach is dual matrix. However a challenge to adopting this approach is if the method is to be used with more than two scores, it cannot without first performing a pre-fusion to bring the number of scores down to two. In addition, the matrix approach often requires a sizeable population, and it is an undefined process and often a judgmental decision on ranking the cells that can sufficiently split the population.

In several industries, there has been an increasing demand for score fusion, with more generic scores and custom scores being made available to the end users. However, existing score fusion processes often times generate sub-optimal results, and underestimate the true value of combing multiple scores. Thus, a need exists in the art for new and innovative process/methodology to identify the optimal combination of scores.

BRIEF SUMMARY OF VARIOUS EMBODIMENTS OF THE INVENTION

Various embodiments of the present invention provide systems, methods, and computer-program products for fusing at least two scores from different predictive models.

More specifically, according to various embodiments, a method is provided for fusing at least two scores from different predictive models. The method comprises the steps of: receiving at least two scores, each score predicting a probability of an outcome associated with a particular unit; calculating, via at least one computer processor, an angle with respect to a horizon at which an object would rest at a point on a frictionless spherical surface, wherein the calculation is based at least in part on the at least two scores, wherein the object comprises one or more characteristics of the particular unit at said point on the frictionless spherical surface, and wherein the at least two scores represent a downward force of gravity that would be exerted upon the object; and calculating, via the at least one computer processor, a displaced force based on the angle and the downward force of gravity interacting according to laws of physics, wherein the displaced force is a force that would need to be exerted upon the object to compel the object to move down the frictionless spherical surface, and wherein said displaced force is used as a fused score for the at least two scores.

According to various embodiments, a system is provided for fusing at least two scores from different predictive models. In certain embodiments, the system comprises at least one computer processor configured to: receive at least two scores, each score predicting a probability of an outcome associated with a particular unit; calculate an angle with respect to a horizon at which an object would rest at a point on a frictionless spherical surface, wherein the calculation is based at least in part on the at least two scores, wherein the object comprises one or more characteristics of the particular unit at said point on the frictionless spherical surface, and wherein the at least two scores represent a downward force of gravity that would be exerted upon the object; and calculate a displaced force based on the angle and the downward force of gravity interacting according to laws of physics, wherein the displaced force is a force that would need to be exerted upon the object to compel the object to move down the frictionless spherical surface, and wherein said displaced force used as a fused score for the at least two scores.

According to various embodiments, a computer program product is also provided comprising at least one computer-readable storage medium having computer-readable program code portions embodied therein. The computer-readable program code portions comprise: an executable portion configured to receive at least two scores, each score predicting a probability of an outcome associated with a particular unit; an executable portion configured to calculate an angle with respect to a horizon at which an object would rest at a point on a frictionless spherical surface, wherein the calculation is based at least in part on the at least two scores, wherein the object comprises one or more characteristics of the particular unit at said point on the frictionless spherical surface, and wherein the at least two scores represent a downward force of gravity that would be exerted upon the object; and an executable portion configured to calculate a displaced force based on the angle and the downward force of gravity interacting according to laws of physics, wherein the displaced force is a force that would need to be exerted upon the object to compel the object to move down the frictionless spherical surface, and wherein said displaced force is used as a fused score for the at least two scores.

BRIEF DESCRIPTION OF THE SEVERAL VIEWS OF THE DRAWING(S)

Reference will now be made to the accompanying drawings, which are not necessarily drawn to scale, and wherein:

FIG. 1 shows an overview of one embodiment of a system architecture that can be used to practice aspects of the present invention.
FIG. 2 shows an exemplary schematic diagram of an application server according to an embodiment of the present invention.
FIG. 3 is a graph illustrating a random sample of consumer credit data over a period of time.
FIG. 4 is a graph illustrating individual performance over a window of time.
FIG. 5 is a second graph illustrating individual performance over a window of time.
FIG. 6 shows an example of a process flow for evaluating the predictive behavior of a segment of individuals that may use various aspects of the present invention.
FIG. 7 provides a flow diagram of a scoring application according to an embodiment of the present invention.
FIG. 8 provides a graphical representation of a fusion process according to a second embodiment of the present invention.
FIG. 9 provides a flow diagram of the fusion module according to a second embodiment of the present invention.

DETAILED DESCRIPTION OF VARIOUS EMBODIMENTS

Various embodiments will now be described more fully hereinafter with reference to the accompanying drawings, in which some, but not all embodiments of the inventions are shown. Indeed, the various embodiments of the present invention may be embodied in many different forms and should not be construed as limited to the embodiments set forth herein; rather, these embodiments are provided so that this disclosure will satisfy applicable legal requirements. The term "or" is used herein in both the alternative and conjunctive sense, unless otherwise indicated. The terms "illustrative," "example," and "exemplary" are used to be examples with no indication of quality level. Like numbers refer to like elements throughout.

**I. Methods, Apparatus, Systems, and Computer Program Products**

As should be appreciated, the various embodiments may be implemented in various ways, including as methods, apparatus, systems, or computer program products. Accordingly, the embodiments may take the form of an entirely hardware embodiment or an embodiment in which a processor is programmed to perform certain steps. Furthermore, the various implementations may take the form of a computer program product on a computer-readable storage medium having computer-readable program instructions embodied in the storage medium. Any suitable computer-readable storage medium may be utilized including hard disks, CD-ROMs, optical storage devices, or magnetic storage devices.

Particular embodiments are described below with reference to block diagrams and flowchart illustrations of methods, apparatus, systems, and computer program products. It should be understood that each block of the block diagrams and flowchart illustrations, respectively, may be implemented in part by computer program instructions, e.g., as logical steps or operations executing on a processor in a computing system. These computer program instructions may be loaded onto a computer, such as a special purpose computer or other programmable data processing apparatus to produce a specifically-configured machine, such that the instructions which execute on the computer or other programmable data processing apparatus implement the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the functionality specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide operations for implementing the functions specified in the flowchart block or blocks.

Accordingly, blocks of the block diagrams and flowchart illustrations support various combinations for performing the specified functions, combinations of operations for performing the specified functions and program instructions for performing the specified functions. It should also be understood that each block of the block diagrams and flowchart illustrations, and combinations of blocks in the block diagrams and flowchart illustrations, can be implemented by special purpose hardware-based computer systems that perform the specified functions or operations, or combinations of special purpose hardware and computer instructions.

## II. Exemplary System Architecture

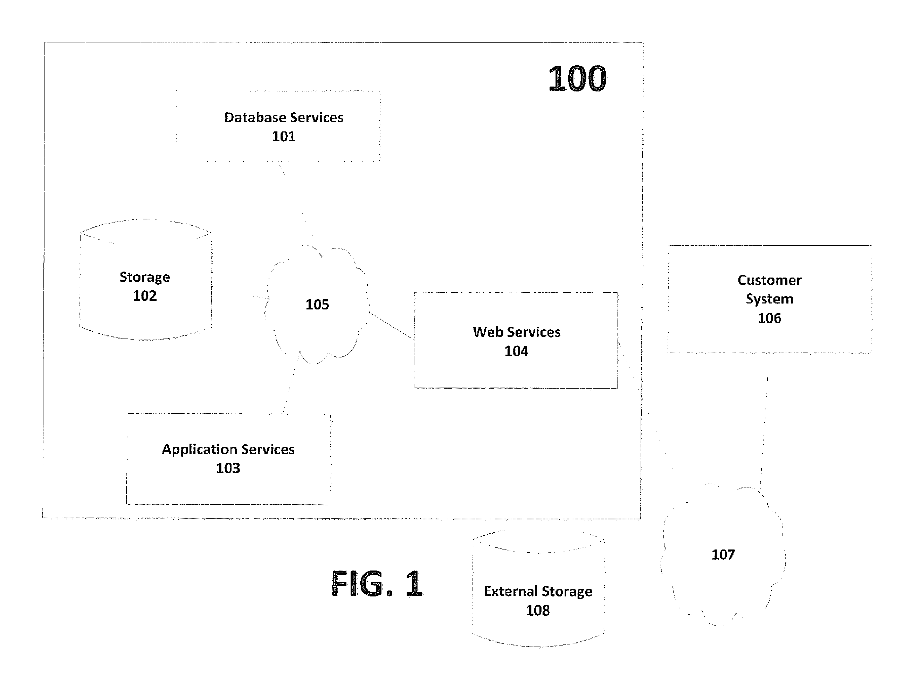

FIG. 1 provides an illustration of a system architecture **100** that can be used in conjunction with various embodiments of the present invention. For instance, according to particular embodiments, the system architecture **100** may be associated with a service provider that provides customers with various predictive scores such as credit scores for one or more individuals. For example, in particular embodiments, the system architecture **100** is associated with Equifax®, a consumer credit reporting agency.

In particular embodiments, the system architecture **100** may include a collection of services such as web services, database operations and services, and services used to process requests received from various customers, and these services may be provided by sub-systems residing within the system architecture **100**. For instance, the system architecture **100** shown in FIG. 1 includes database services **101,** storage media **102,** web services **104,** and application services **103**. In various embodiments, the database services **101** may include a database management system and the storage media **102** may include one or more databases and one or more database instances. In various embodiments, the storage media **102** may be one or more types of medium such as hard disks, magnetic tapes, or flash memory. The term "database" refers to a structured collection of records or data that is stored in a computer system, such as via a relational database, hierarchical database, or network database. For example, in one embodiment in which the system architecture **100** is associated with Equifax®, the storage media **102** includes a database that stores historical information on credit holders worldwide.

In various embodiments, the web services **104** are provided to customers who may wish to submit requests and access various services within the system architecture **100.** For instance, in particular embodiments, the web services **104** deliver web pages to customers' browsers as well as other data files to customers' web-based applications. Therefore, in various embodiments, the web services **104** include the hardware, operating system, web server software, TCP/IP protocols, and site content (web pages, images, and other files). Thus, for example, a customer may access one or more web pages delivered by the web services **104** and may place a request with the system architecture **100** to perform a particular service provided by the service provider, such as, for example, a request to generate credit scores for a group of individuals.

In the embodiment of the system architecture **100** shown in FIG. 1, the web services **104** communicate over a network **107** (such as the Internet) with a customer's system **106.** The customer's system **106** may interface with the web services **104** using a browser residing on devices such as a desktop computer, notebook or laptop, personal digital assistant ("PDA"), cell phone, or other processing devices. In other embodiments, the provider's system architecture **100** is in direct communication with the customer's system **106.** For example, the customer may send the service provider an email or the customer's system **106** and the provider's architecture **100** may exchange information via electronic data interchange ("EDI") over an open or closed network. Furthermore, as explained in more detail below, the web services **104** may also communicate with other externals systems such as a third-party storage media **108.**

In various embodiments, the application services **103** include applications that are used to provide functionality within the system architecture **100.** For instance, in one embodiment, the application services **103** are made up of one or more servers and include a scoring application. In this particular embodiment, the scoring application provides functionality to generate a predictive score, for example. In addition, the services **101, 103, 104,** and storage media **102** of the system architecture **100** may also be in electronic communication with one another within the system architecture **100.** For instance, these services **101, 103, 104,** and storage media **102** may be in communication over the same or different wireless or wired networks **105** including, for example, a wired or wireless Personal Area Network ("PAN"), Local Area Network ("LAN"), Metropolitan Area Network ("MAN"), Wide Area Network ("WAN"), the Internet, or the like. Finally, while FIG. 1 illustrates the components of the system architecture **100** as separate, standalone entities, the various embodiments of the system architecture **100** are not limited to this particular architecture.

*a. Application Server*

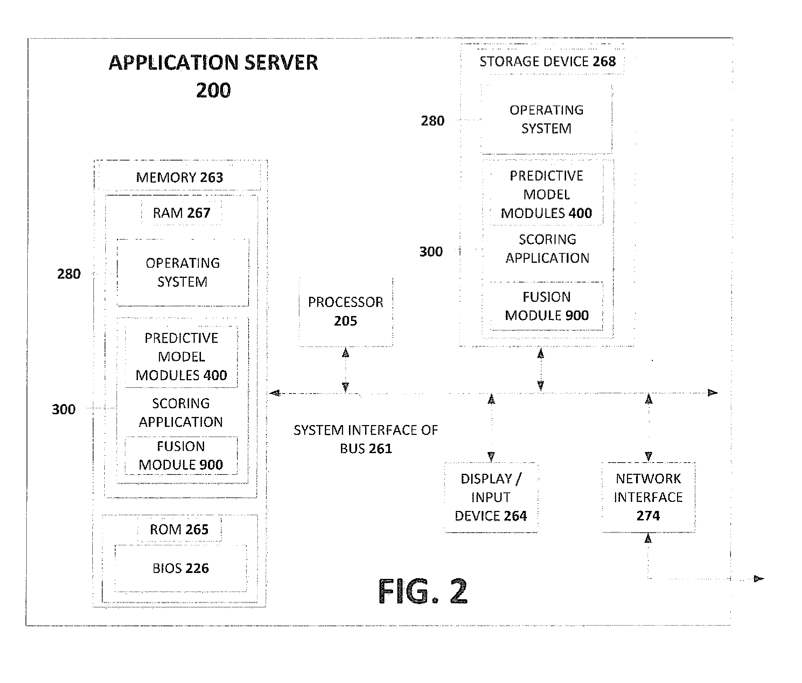

FIG. 2 provides a schematic of an application server **200** that may be part of the application services **103** according to one embodiment of the present invention. As will be understood from this figure, in this embodiment, the application server **200** includes a processor **205** that communicates with other elements within the application server **200** via a system interface or bus **261.** The processor **205** may be embodied in a number of different ways. For example, the processor **205** may be embodied as various processing means such as a processing element, a microprocessor, a coprocessor, a controller or various other processing devices including integrated circuits such as, for example, an application specific integrated circuit ("ASIC"), a field programmable gate array ("FPGA"), a hardware accelerator, or the like. In an exemplary embodiment, the processor **205** may be configured to execute instructions stored in the device memory or otherwise accessible to the processor **205.** As such, whether configured by hardware or software methods, or by a combination thereof, the processor **205** may represent an entity capable of performing operations according to embodiments of the present invention while configured accordingly. A display device/input device **264** for receiving and displaying data is also included in the application server **200.** This display device/input device **264** may be, for example, a keyboard or pointing device that is used in combination with a monitor. The application server **200** further includes memory **263,** which may include both read only memory ("ROM") **265** and random access memory ("RAM") **267.** The application server's ROM **265** may be used to store a basic input/output system ("BIOS") **226** containing the basic routines that help to transfer information to the different elements within the application server **200.**

In addition, in one embodiment, the application server **200** includes at least one storage device **268,** such as a hard disk drive, a CD drive, and/or an optical disk drive for storing information on various computer-readable media. The storage device(s) **268** and its associated computer-readable media may provide nonvolatile storage. The computer-readable media described above could be replaced by any other type of computer-readable media, such as embedded or removable multimedia memory cards ("MMCs"), secure digital ("SD") memory cards, Memory Sticks, electrically erasable programmable read-only memory ("EEPROM"), flash memory, hard disk, or the like. Additionally, each of these storage devices **268** may be connected to the system bus **261** by an appropriate interface.

Furthermore, a number of program applications (e.g., set of computer program instructions) may be stored by the various storage devices **268** and/or within RAM **267.** Such program applications may include an operating system **280** and a scoring application **300.** This application **300** may control certain aspects of the operation of the application server **200** with the assistance of the processor **205** and operating system **280.** Furthermore, the scoring application **300** may include one or more modules for performing specific operations associated with the application **300,** although its functionality need not be modularized. For instance, in particular embodiments, the scoring application **300** includes one or more predictive model modules **400** and a fusion module **900.** As described in greater detail below, the one or more predictive model modules **400** provide a score predicting the probability of an outcome associated with a particular unit. For example, in particular embodiments, the one or more predictive model modules **400** provide a credit score predicting the creditworthiness of a particular individual. The fusion module **900** provides a fused score as a result of performing score fusion on two or more scores produced by the one or more predictive model modules **400.**

Also located within the application server **200,** in particular embodiments, is a network interface **274** for interfacing with various computing entities, such as the web services **104,** database services **101,** and/or storage media **102.** This communication may be via the same or different wired or wireless networks (or a combination of wired and wireless networks), as discussed above. For instance, the communication may be executed using a wired data transmission protocol, such as fiber distributed data interface ("FDDI"), digital subscriber line ("DSL"), Ethernet, asynchronous transfer mode ("ATM"), frame relay, data over cable service interface specification ("DOCSIS"), or any other wired transmission protocol. Similarly, the application server **200** may be configured to communicate via wireless external communication networks using any of a variety of protocols, such as general packet radio service ("GPRS"), Universal Mobile Telecommunications System ("UMTS"), Code Division Multiple Access 2000 ("CDMA2000"), CDMA2000 1X ("1xRTT"), Wideband Code Division Multiple Access ("WCDMA"), Time Division-Synchronous Code Division Multiple Access ("TD-SCDMA"), Long Term Evolution ("LTE"), Evolved Universal Terrestrial Radio Access Network ("E-UTRAN"), Evolution-Data Optimized ("EVDO"), High Speed Packet Access ("HSPA"), High-Speed Downlink Packet Access ("HSDPA"), IEEE 802.11 ("Wi-Fi"), 802.16 ("WiMAX"), ultra wideband ("UWB"), infrared ("IR") protocols, Bluetooth protocols, wireless universal serial bus ("USB") protocols, and/or any other wireless protocol.

It will be appreciated that one or more of the application server's components may be located remotely from other application server components. Furthermore, one or more of the components may be combined and additional components performing functions described herein may be included in the application server **200.**

*b. Additional Exemplary System Components*

The database services **101,** web services **104,** customer computer system **106,** and external storage **108** may each include components and functionality similar to that of the application services **103.** For example, in one embodiment, each of these entities may include: (1) a processor that communicates with other elements via a system interface or bus; (2) a display device/input device; (3) memory including both ROM and RAM; (4) a storage device; and (5) a communication interface. These architectures are provided for exemplary purposes only and are not limiting to the various embodiments. The terms "computing device," "computer device," "device," "server," "computer system," "system," and similar words used herein interchangeably may refer to one or more computers, computing entities, computing devices, mobile phones, desktops, tablets, notebooks, laptops, distributed systems, servers, blades, gateways, switches, processing devices, processing entities, relays, routers, network access points, base stations, the like, and/or any combination of devices or entities adapted to perform the functions, operations, and/or processes described herein.

**III. Exemplary System Operation**

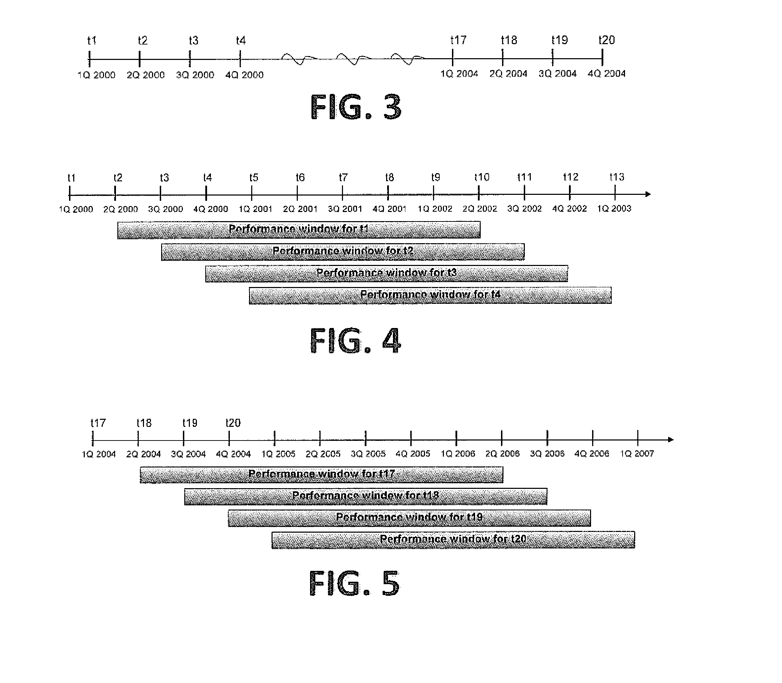

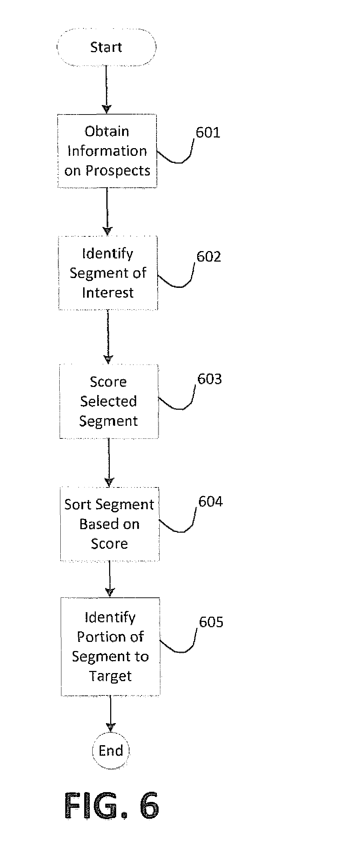

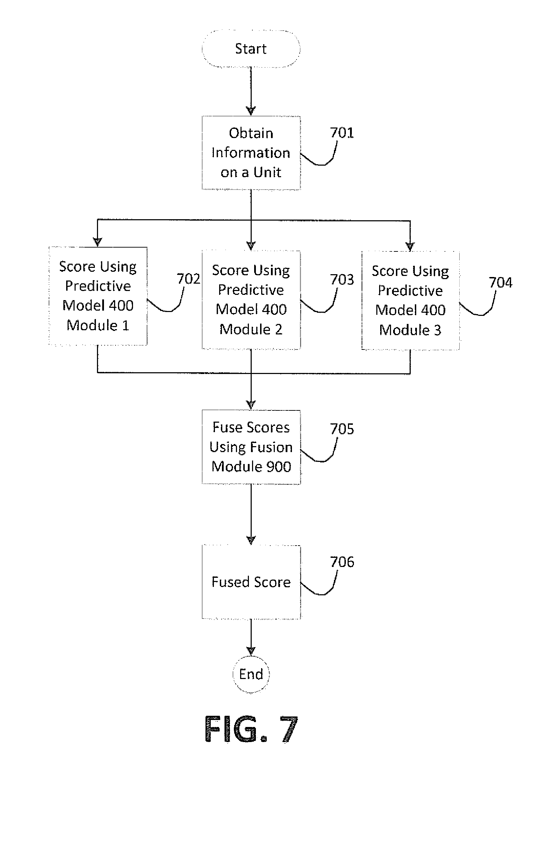

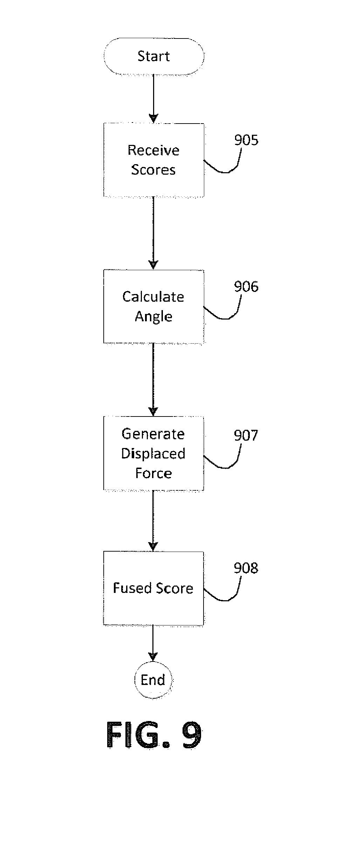

As noted above, various embodiments of the present invention provide systems and methods for fusing at least two scores generated from one or more predictive models. Reference will now be made to FIGS. 3-9, which illustrate operations and processes as produced by these various embodiments. For instance, FIG. 6 provides an example of a process flow for evaluating the predictive behavior of a segment of individuals that may use various aspects of the present invention. FIG. 7 provides a flow diagram of a scoring application **300** according to an embodiment. While FIG. 9 provides a flow diagram of a fusion module **900** that performs the process of fusing at least two scores generated from one or more predictive models (or otherwise) according to various embodiments. The scoring application **300** and corresponding modules **400, 900** are described in greater detail below.

*a. Example of Predictive Behavior Process*

To assist in providing the disclosure for various embodiments of this invention, an example of a process for evaluating the predictive behavior of a segment of individuals is shown in FIG. 6. This example is provided solely to aid in describing various aspects of the claimed invention and should not be construed to limit the scope of the claimed invention. As will be understood by those of ordinary skill in the art in light of this disclosure, the claimed invention can be used in conjunction with numerous processes for evaluating predictive behavior and is not limited to the particular process described in FIG. 6.

For this particular example, a bank (e.g., Bank A) is interesting in marketing a new mortgage refinancing program to a number of individuals in a particular geographic region. For instance, Bank A may be located in the city of Atlanta and the new mortgage refinancing program may be a new program made available to homeowners in the city of Atlanta. In this instance, Bank A may wish to send out mailings to a number of homeowners to advertise the program and may wish to narrow down the list of homeowners in Atlanta to a list of homeowners likely to qualify for the new mortgage refinancing program. Therefore, Bank A may develop one or more predictive models for evaluating the homeowners or may have a service provider perform the predictive processing for it based on one or more predictive models the service provider has developed.

In a predictive modeling initiative, a well-defined population may be the starting point of the analysis. The analysis population is the entire set of entities from which statistical inference will be drawn. Therefore, returning to the example, if Bank A wants to build a predictive model for its marketing campaign, the analysis population may be all consumers with at least one mortgage for a home located in the city of Atlanta. In practice, the actual analysis may focus on a certain timeframe, instead of using the entire timeframe that is available. The key is typically to balance the recency and the length of the selected timeframe.

Thus, the first step to building the predictive model is to obtain a sample of records over a period of time, accommodating any possible distortions such as seasonality and economic cycles. Depending on the embodiment, the sample may include a random sample of consumers or a sample of consumers of interest to the party who will utilize the model, such as consumers who have a mortgage for a home located in the city of Atlanta. The period of time may vary among embodiments as well. As an example for this step of the process, Bank A could obtain quarterly samples of consumer data over 1 year (1Q 2000 to 4Q 2000) or longer depending on the purpose, as shown in FIG. 3. The sample of consumer data can be obtained from various sources such as any of the credit reporting agencies that make up a part of the credit bureaus or Bank A may simply collect the data itself over a time period and store the data in a database or data warehouse. As will be apparent to one of ordinary skill in the art, a sample of consumer data can be collected, stored, obtained, or provided in many different ways.

Next, an outcome performance (e.g., individual performance for each consumer in the sample of consumer data) is determined over a window of time. For instance, a typical window of time may be twelve (12) to twenty-four (24) months and individual performance is based on various parameters, such as whether the consumer had an account ninety (90) plus days past due during the window of time, whether the consumer had a charge-off during the window of time, or whether the consumer had a bankruptcy during the window of time. An example using twenty-four (24) month windows is shown in FIGS. 4 and 5.

By the end of this step, outcome performance will be assigned. For example, accounts can be flagged as "good" or "bad" (based on performance outcome) and the dependent attribute will be ready for model development. There are many different types of the predictive models that may be developed but generally there are two classes of predictive modeling applications, i.e., forecasting and classification. Forecasting models generate outputs that are continuous-valued. That is, the outputs are typically values ranging from a minimum to a maximum allowed. These models may be used, for example, in applications for forecasting sales, volumes, costs, yields, rates, and scores. Classification models generate outputs that are 1-of-n discrete possible outcomes. Often there is a single output that represents a Boolean (i.e., yes or no) outcome. These models may be used, for example, in pattern recognition applications, fraud detection, target recognition, vote forecasting, prospect classification, chum prediction, and bankruptcy prediction. Thus, in this particular example, Bank A may develop one or more forecasting models in order to identify homeowners for targeting for its marketing campaign.

Turning now to FIG. 6, an example of a process flow that may be used by Bank A to identify homeowners for targeting in its marketing campaign is shown. In Step **601,** the process begins with obtaining information about homeowners in the city of Atlanta. Similar to the information used in the development of the predictive models, this information may be gathered from various sources within or external to Bank A. For example, Bank A may gather information on homeowners from local tax records that provide property tax information. Further, Bank A may gather financial information about the homeowners from third-parties or internally, depending on the level of targeting Bank A would like to apply in the marketing campaign.

In Step **602,** Bank A may use criteria in order to define the population of homeowners who will be evaluated. For example, Bank A may filter the entire population of homeowners in the city of Atlanta by defining selected homeowners as those who own homes with an estimated value greater than $150,000 and who have an age of at least twenty-five years old. At the end of the filtering process, Bank A has identified a selected group of homeowners for evaluation, e.g., a segment of interest.

In Step **603,** the process continues with the selected group of homeowners being scored using one or more predictive models. Thus, in this example, the one or more predictive models may have been developed to predict each homeowner's likelihood of qualifying for Bank A's new mortgage refinancing program. For example, each of the predictive models may provide a score (e.g., a number between 1 and 0) for a particular homeowner that represents the probability that the particular homeowner would qualify for the new mortgage refinancing program if he or she were interested in refinancing his or her home.

Once the score for each homeowner for the selected group of homeowners has been scored, the process continues with sorting the selected group of homeowners based on their individual scores, shown as Step **604.** For example, Bank A may simply list/rank the homeowners based on their individual scores or may group homeowners based on their likelihood of qualifying for the program. For instance, Bank A may define three groups as "highly likely to quality," "likely to qualify," and "not likely to qualify" and place each homeowner into one of the groups. Those of ordinary skill in the art can envision various methods for sorting the homeowners in light of this disclosure.

Finally, in Step **605,** Bank A identifies the portion of the selected group of homeowners to target in the marketing campaign. For example, Bank A may select the top twenty-five percent of the homeowners from the sorted list or may select the "highly likely to qualify" group to target in the marketing campaign. Further, Bank A may identify more than one portion of homeowners to target in the marketing campaign, For instance, Bank A may select the "highly likely to qualify" group to send emails and mailings and select the "likely to qualify" group to send emails only. Once Bank A has completed the process, Bank A may then gather the necessary information for the identified portion of the selected group of homeowners so that the bank may send out the appropriate marketing material.

As previously mentioned, in many instances, a party may be interested in using more than one score from one or more predictive models in performing the analysis. For instance, in the example above, Bank A may be interested in scoring each homeowner from the selected group of homeowners using two or more predictive models in order to drive better predictability of whether the homeowners would qualify for the new mortgage refinancing program. Therefore, in many instances, a party will perform a fusion process by fusing the multiple scores into a single score that will be used for predictive purposes.

*b. Scoring Application*

Typically, one or more computers are utilized in performing the scoring and/or score fusion processes. For instance, returning to the example of Bank A identifying a group of homeowners to target in a new marketing campaign, the step of scoring the selected group of homeowners (Step **603**) may be performed electronically by executing one or more computer-program applications on one or more computers. Further, in particular embodiments, this step may encompass determining scores using at least two predictive models and fusing the scores together into a single score to be used for predictive purposes.

In particular embodiments, Bank A may develop, build, and execute the computer applications for performing the scoring and/or score fusion processes. However, in other embodiments, Bank A may have a service provider perform this step for Bank A. Thus, returning to FIG. 1, a customer (e.g., Bank A) of a service provider may send a request from its system **106** over the network **107** to the service provider's system architecture **100** to have the service provider perform a scoring process that involves using scores from at least two different predictive models and fusing the scores from the different models together to produce a fused score. Again, the example of Bank A will be used for illustrative purposes only and should not be construed to limit the scope of the invention. As one of ordinary skill in the art will understand, the scoring and fusion processes described in greater detail below can be used in numerous predictive modeling applications.

In this particular instance, the request received from Bank A includes information on the group of selected homeowners. Depending on the embodiment, the request may include all the needed information to perform the scoring for each homeowner in the group or limited information, in which case, the service provider may need to gather additional information on each homeowner in the group. For example, the service provider may gather information internally from storage media **102** located within the service provider's system architecture **100** or externally from third-party data sources **108.**

As previously discussed, in various embodiments, the service provider's architecture **100** may include application services **103** which may comprise of one or more servers **200**. In particular instances, the application server(s) **200** includes a scoring application **300** for preforming the scoring process for the group of selected homeowners. Thus, FIG. 7 provides a flow diagram of a scoring application **300** according to one embodiment of the invention. In this instance, the scoring application **300** may be executed by the application server **200** residing in the application services **103** of the service provider's system architecture **100.**

Starting with Step **701,** the scoring application **300** obtains information for a particular unit of interest. Thus, returning to the example, the scoring application **300** obtains information on one of the homeowners from the group of selected homeowners. Typically, the information associated with the homeowner includes the information needed as inputs to the predictive models that are a part of the scoring application **300.** For example, the information may include historical financial and personal information for each homeowner. In this particular instance, the scoring application **300** shown in FIG. 7 includes three predictive model modules **400** (Module 1, Module 2, and Module 3). Each predictive model module **400** is based on a separate predictive model and is used to produce a separate score for each homeowner. Therefore, in Steps **702, 703,** and **704,** the scoring application **300** scores the particular homeowner by invoking each of the three predictive model modules **400**. As a result, each module **400** produces a separate score for the homeowner.

It should be mentioned, that in particular embodiments, ideally the scores represent different dimensions of the data, with a low correlation among the scores and as a result, each score contributes a different dimension of behavior to the overall score fusion process. For example, in one embodiment, one of the predictive model modules **400** may produce a credit risk score, one **400** may produce a bankruptcy score, and one **400** may produce an affordability score that when fused represent the relative contribution of each score dimension. Thus, in Step **705,** the scoring application **300** invokes the fusion module **900** to fuse the scores produced by each of the predictive model modules **400** into a single fused score and the scoring application **300** returns the fused score for the particular unit (e.g., homeowner), shown as Step **706.**

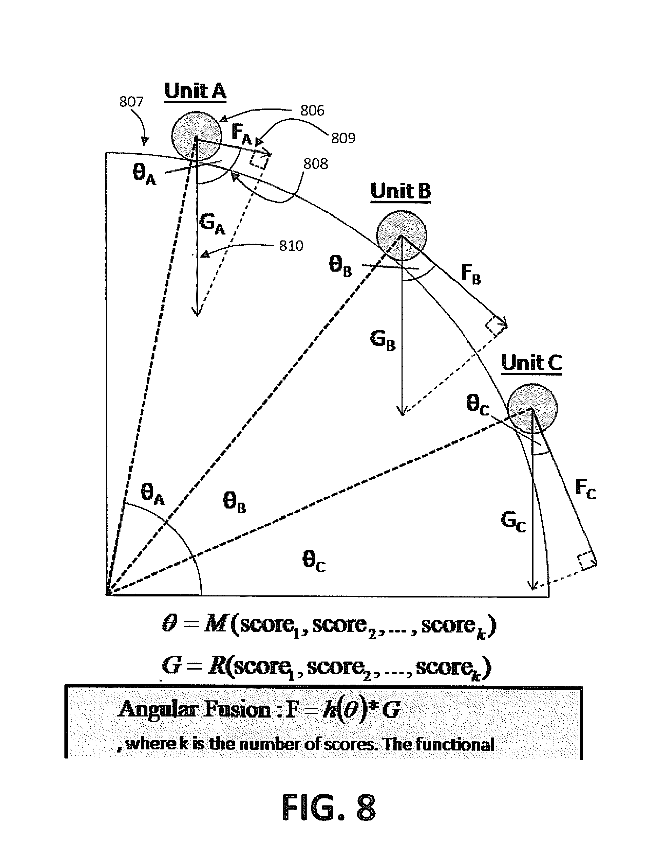

As explained in further detail below, in various embodiments, the fusing process involves fusing scores that, when fused, provide a summary of a homeowner's characteristics. As shown in FIG. 8, in particular embodiments, the fusion formula mimics the displaced force of gravity exerted upon an object **806** placed at some point on a frictionless spherical surface **807**. One or more scores are used to calculate the angle **808** with respect to the horizon **809** at which the object **806** would rest on the surface **807,** and the one or more scores are used to represent the downward force of gravity **810** exerted upon the object **806**. The angle **808** and the gravity **810** interact according to the laws of physics to calculate a displaced force that would need to be exerted upon the object **806** in order to compel it to move down the spherical surface **807**. In these particular embodiments, the displaced force calculation is then used as the fused score.

*c. Fusion Module Incorporating the Displaced Force of Gravity Exerted upon an Object*

FIG. 9 provides a flow diagram of the fusion module **900** according to an alternative embodiment of the invention. In Step **905,** the fusion module **900** receives the scores to be fused. Similar to the first embodiment, in the example above, the fusion module **900** receives the scores from the three different predictive model modules **400** of the scoring application **300.** In Step **906,** the fusion module **900** calculates an angle with respect to a horizon at which an object would rest on a frictionless spherical surface based on the scores. Similar to the above-described fusion module, the object comprises one or more characteristics of the particular homeowner. Further, the object simulated as being placed at a point on the spherical surface and the scores represent a downward force of gravity that would be exerted upon the object. In Step **907,** the fusion module **900** calculates a displaced force based on the angle and the downward force of gravity, which interact according to laws of physics. This displaced force is a force that would need to be exerted upon the object to compel the object to move down the spherical surface and this calculated displaced force is used as the fused score for the scores received from the three different predictive model modules **400.** Therefore, in Step **908,** the fusion module **900** returns the fused score to the scoring application **300.**

In particular embodiments, the general form of algorithm used by the alternative embodiment of the fusion module **900** is:

Displaced Force or Angular Fusion = h($\theta$)*G, wherein

$$\theta = M\left[f_1\left(\sum_{i=0}\alpha_{1i}x_1^i\right), f_2\left(\sum_{i=0}\alpha_{2i}x_2^i\right), ..., f_k\left(\sum_{i=0}\alpha_{ki}x_k^i\right)\right],$$

$$G = R\left[g_1\left(\sum_{i=0}\beta_{1i}x_1^i\right), g_2\left(\sum_{i=0}\beta_{2i}x_2^i\right), ..., g_k\left(\sum_{i=0}\beta_{ki}x_k^i\right)\right],$$

and wherein $x_l$ through $x_k$ are the scores, i = number of polynomial terms and k = number of scores, and "Angular Fusion" corresponds to the "Displaced Force" that would need to be exerted upon the object to compel the object to move down the spherical surface, which force is, in turn, used as the fused score for the scores received from the three different predictive model modules **400.**

Further in particular embodiments, properties of the general algorithm include:

$$\sum_{j=1}^{k}\sum_{i=1}\left|\alpha_{ji}\right| > 0 \text{ and } \sum_{j=1}^{k}\sum_{i=1}\left|\beta_{ji}\right| > 0,$$

In addition, in particular embodiments, M and R are in the form of a power function, an exponential function, or a logarithm function, and h is any trigonometric function.

### d. Evaluation of Score Fusion Performance

In particular situations, a party may wish to assess the performance of the score fusion process described in this embodiment. For such assessments, several measures may be used to compare performance to the incumbent benchmark solution. For instance, in a credit risk application, examples may include: (1) using the Kolmogorov-Smirnov Statistic (KS) and GINI coefficient to measure the amount of separation the score provides when ranking goods versus bads (e.g., good versus bad loans) in the score distribution; (2) determining whether a monotonically increasing interval bad rate occurs when moving from the low risk scoring percentiles to the high risk scoring percentiles; and (3) considering the effectiveness of the bottom-scoring ranges in terms of capturing incidence and dollar losses. For this particular example, a strong model should capture a significant portion of bads (e.g., bad loans) in the bottom-scoring percentiles while pushing the goods (e.g., good loans) to the top-scoring percentiles.

As a further example, in particular instances, the KS is equal to the maximum difference between the cumulative percentages of goods and bads (e.g., good and bad loans) across all score values:

$$KS \equiv \underset{\substack{\text{over all score} \\ \text{values } S}}{\text{Max}}\left[\frac{N_{\text{goods for score}\leq S}}{N_{\text{total goods}}} - \frac{N_{\text{bads for score}\leq S}}{N_{\text{total bads}}}\right],$$

where $N_{\text{goods}}$ for score$\leq S$ and $N_{\text{bads}}$ for score$\leq S$ are the cumulative numbers of goods and bads with scores $\leq S$; $N_{\text{totalgoods}}$ and $N_{\text{total}}$ bads are the total numbers of goods and bads in the sample, respectively.

The KS ranges from 0 to 100 and serves as an index of the degree of separation between two groups (e.g.,

default / non-default, payment / nonpayment, etc.). The higher the KS the better the ability of the model to discriminate between the two groups under study. In most instances, KS should be compared to a benchmark score, which is either a generic model or the champion model.

## IV. Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for fusing at least two scores from different predictive models, said method comprising the steps of:

   receiving, via one or more processors, at least two scores, each score predicting a probability of an outcome associated with a particular unit;
   calculating, via the one or more processors, an angle with respect to a horizon at which an object would rest at a point on a frictionless spherical surface, wherein said calculation is based at least in part on said at least two scores, wherein said object comprises one or more characteristics of said particular unit at said point on said frictionless spherical surface, and wherein said at least two scores represent a downward force of gravity that would be exerted upon said object; and
   calculating, via the one or more processors, a displaced force based on said angle and said downward force of gravity interacting according to laws of physics, wherein said displaced force is a force that would need to be exerted upon said object to compel said object to move down said frictionless spherical surface, and wherein said displaced force is used as a fused score for said at least two scores.

2. The method of Claim 1, wherein each of said at least two scores represent different dimensions of data and contributes a different dimension of behavior to said fused score.

3. The method of Claim 1, wherein said displaced force is calculated based on an algorithm, said algorithm comprising:

   Displaced Force = h($\square$)*G and wherein:

   (a) $\theta = M \left[ f_1 \left( \sum_{i=0} \alpha_{1i} x_1^i \right), f_2 \left( \sum_{i=0} \alpha_{2i} x_2^i \right), ..., f_k \left( \sum_{i=0} \alpha_{ki} x_k^i \right) \right]$ ;

   (b) $G = R \left[ g_1 \left( \sum_{i=0} \beta_{1i} x_1^i \right), g_2 \left( \sum_{i=0} \beta_{2i} x_2^i \right), ..., g_k \left( \sum_{i=0} \beta_{ki} x_k^i \right) \right]$ ;

   (c) $x_1$ through $x_k$ comprise said at least two scores;
   (d) i comprises a number of polynomial terms; and
   (e) k comprises a number indicative of the number of scores received.

4. The method of Claim 3, wherein properties of said algorithm further comprise:

$$\sum_{j=1}^{k} \sum_{i=1} |\alpha_{ji}| > 0 \text{ and } \sum_{j=1}^{k} \sum_{i=1} |\beta_{ji}| > 0$$

.

5. A system for fusing at least two scores from different predictive models, said system comprising at least one computer processor configured to:

receive at least two scores, each score predicting a probability of an outcome associated with a particular unit;
calculate an angle with respect to a horizon at which an object would rest at a point on a frictionless spherical surface, wherein said calculation is based at least in part on said at least two scores, wherein said object comprises one or more characteristics of said particular unit at said point on said frictionless spherical surface, and wherein said at least two scores represent a downward force of gravity that would be exerted upon said object; and
calculate a displaced force based on said angle and said downward force of gravity interacting according to laws of physics, wherein said displaced force is a force that would need to be exerted upon said object to compel said object to move down said frictionless spherical surface, and wherein said displaced force is used as a fused score for said at least two scores.

6. The system of Claim 5, wherein each of said at least two scores represent different dimensions of data and contributes a different dimension of behavior to said fused score.

7. The system of Claim 5, wherein said displaced force is calculated based on an algorithm, said algorithm comprising:

Displaced Force = h($\square$)*G, and wherein:

$$\text{(a)} \quad \theta = M\left[ f_1\left(\sum_{i=0} \alpha_{1i} x_1^i \right), f_2\left(\sum_{i=0} \alpha_{2i} x_2^i \right), ..., f_k\left(\sum_{i=0} \alpha_{ki} x_k^i \right) \right];$$

$$\text{(b)} \quad G = R\left[ g_1\left(\sum_{i=0} \beta_{1i} x_1^i \right), g_2\left(\sum_{i=0} \beta_{2i} x_2^i \right), ..., g_k\left(\sum_{i=0} \beta_{ki} x_k^i \right) \right];$$

(c) $x_l$ through $x_k$ comprise said at least two scores;
(d) i comprises a number of polynomial terms; and
(e) k comprises a number indicative of the number of scores received.

8. A computer-program product comprising at least one non-transitory computer-readable storage medium having computer-readable program code portions embodied therein, said computer-readable program code portions comprising:

an executable portion configured to receive at least two scores, each score predicting a probability of an outcome associated with a particular unit;
an executable portion configured to calculate an angle with respect to a horizon at which an object would rest at a point on a frictionless spherical surface, wherein said calculation is based at least in part on said at least two scores, wherein said object comprises one or more characteristics of said particular unit at said point on said frictionless spherical surface, and wherein said at least two scores represent a downward force of gravity that would be exerted upon said object; and
an executable portion configured to calculate a displaced force based on said angle and said downward force of gravity interacting according to laws of physics, wherein said displaced force a force that would need to be exerted upon said object to compel said object to move down said frictionless spherical surface, and wherein said displaced force is used as a fused score for said at least two scores.

9. The computer-program product of Claim 8, wherein each of said at least two scores represent different dimensions of data and contributes a different dimension of behavior to said fused score.

10. The computer-program product of Claim 8, wherein said displaced force exerted upon said object is calculated based on an algorithm, said algorithm comprising:

Displaced Force = h($\square$)*G, and wherein:

$$\theta = M\left[ f_1\left( \sum_{i=0} \alpha_{1i} x_1^i \right), f_2\left( \sum_{i=0} \alpha_{2i} x_2^i \right), ..., f_k\left( \sum_{i=0} \alpha_{ki} x_k^i \right) \right];$$

$$G = R\left[ g_1\left( \sum_{i=0} \beta_{1i} x_1^i \right), g_2\left( \sum_{i=0} \beta_{2i} x_2^i \right), ..., g_k\left( \sum_{i=0} \beta_{ki} x_k^i \right) \right];$$

    (c) $x_1$ through $x_k$ comprise said at least two scores;
    (d) i comprises a number of polynomial terms; and
    (e) k comprises a number indicative of the number of scores received.

**11.** The system of Claim 7 or computer-program product of Claim 10, wherein properties of said algorithm further comprise:

$$\sum_{j=1}^{k} \sum_{i=1} \left| \alpha_{ji} \right| > 0 \text{ and } \sum_{j=1}^{k} \sum_{i=1} \left| \beta_{ji} \right| > 0 .$$

**12.** The method of Claim 3 or system of Claim 7 computer-program product of Claim 10, wherein M and R are functions selected from the group consisting of a power function, an exponential function, and a logarithm function.

**13.** The method of Claim 3 or system of Claim 7 computer-program product of Claim 10, wherein h comprises a trigonometric function.

**14.** The method of claim 1 or system of claim 5 or computer-program product of Claim 8, wherein said unit is an individual and said at least two scores represent credit scores for said individual.

**15.** The method of claim 1 or system of claim 5 or computer-program product of Claim 8 for assessing or configured to assess performance of fusing said at least two scores by comparing said performance to an incumbent benchmark solution.

FIG. 1

**APPLICATION SERVER 200**

MEMORY 263

RAM 267

OPERATING SYSTEM

PREDICTIVE MODEL MODULES 400

SCORING APPLICATION

FUSION MODULE 900

ROM 265

BIOS 226

280

300

PROCESSOR 205

SYSTEM INTERFACE OF BUS 261

STORAGE DEVICE 268

OPERATING SYSTEM

PREDICTIVE MODEL MODULES 400

SCORING APPLICATION

FUSION MODULE 900

280

300

DISPLAY / INPUT DEVICE 264

NETWORK INTERFACE 274

FIG. 2

EP 2 610 810 A1

t1    t2    t3    t4                                    t17    t18    t19    t20

1Q 2000  2Q 2000  3Q 2000  4Q 2000                          1Q 2004  2Q 2004  3Q 2004  4Q 2004

## FIG. 3

t1    t2    t3    t4    t5    t6    t7    t8    t9    t10    t11    t12    t13

1Q 2000  2Q 2000  3Q 2000  4Q 2000  1Q 2001  2Q 2001  3Q 2001  4Q 2001  1Q 2002  2Q 2002  3Q 2002  4Q 2002  1Q 2003

Performance window for t1

Performance window for t2

Performance window for t3

Performance window for t4

## FIG. 4

t17    t18    t19    t20

1Q 2004  2Q 2004  3Q 2004  4Q 2004  1Q 2005  2Q 2005  3Q 2005  4Q 2005  1Q 2006  2Q 2006  3Q 2006  4Q 2006  1Q 2007

Performance window for t17

Performance window for t18

Performance window for t19

Performance window for t20

## FIG. 5

```
        ┌─────────┐
        │  Start  │
        └────┬────┘
             │
             ▼
     ┌──────────────┐
     │   Obtain     │      601
     │ Information  │
     │ on Prospects │
     └──────┬───────┘
            │
            ▼
     ┌──────────────┐
     │   Identify   │      602
     │  Segment of  │
     │   Interest   │
     └──────┬───────┘
            │
            ▼
     ┌──────────────┐
     │    Score     │      603
     │   Selected   │
     │   Segment    │
     └──────┬───────┘
            │
            ▼
     ┌──────────────┐
     │ Sort Segment │      604
     │   Based on   │
     │    Score     │
     └──────┬───────┘
            │
            ▼
     ┌──────────────┐
     │   Identify   │      605
     │  Portion of  │
     │  Segment to  │
     │    Target    │
     └──────┬───────┘
            │
            ▼
        ┌───────┐
        │  End  │
        └───────┘
```

# FIG. 6

```
                    ┌──────────┐
                    │  Start   │
                    └──────────┘
                         │
                         ▼
                  ┌──────────────┐
                  │   Obtain     │      701
                  │ Information  │
                  │  on a Unit   │
                  └──────────────┘
                         │
        ┌────────────────┼────────────────┐
        ▼                ▼                ▼
┌──────────────┐  ┌──────────────┐  ┌──────────────┐
│ Score Using  │  │ Score Using  │  │ Score Using  │
│  Predictive  │702│  Predictive  │703│  Predictive  │704
│  Model 400   │  │  Model 400   │  │  Model 400   │
│   Module 1   │  │   Module 2   │  │   Module 3   │
└──────────────┘  └──────────────┘  └──────────────┘
        │                │                │
        └────────────────┼────────────────┘
                         ▼
                  ┌──────────────┐
                  │ Fuse Scores  │      705
                  │ Using Fusion │
                  │  Module 900  │
                  └──────────────┘
                         │
                         ▼
                  ┌──────────────┐
                  │              │      706
                  │ Fused Score  │
                  │              │
                  └──────────────┘
                         │
                         ▼
                    ┌──────────┐
                    │   End    │
                    └──────────┘
```

# FIG. 7

$$\theta = M(\text{score}_1, \text{score}_2, \ldots, \text{score}_k)$$

$$G = R(\text{score}_1, \text{score}_2, \ldots, \text{score}_k)$$

Angular Fusion : $F = h(\theta) * G$

, where k is the number of scores. The functional

**FIG. 8**

```
        ( Start )
            |
            v
      +-----------+
      | Receive   |  905
      | Scores    |
      +-----------+
            |
            v
      +-----------+
      | Calculate |  906
      | Angle     |
      +-----------+
            |
            v
      +-----------+
      | Generate  |  907
      | Displaced |
      | Force     |
      +-----------+
            |
            v
      +-----------+
      | Fused Score |  908
      +-----------+
            |
            v
         ( End )
```

# FIG. 9

**Europäisches Patentamt**
**European Patent Office**
**Office européen des brevets**

# EUROPEAN SEARCH REPORT

Application Number

EP 12 19 9779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Notice from the European Patent Office dated 1 October 2007 concerning business methods", OFFICIAL JOURNAL OF THE EUROPEAN PATENT OFFICE, EPO, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. In accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q40/02 |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 4 April 2013 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61581502 A
- US 61581431 A